# EUROPÄISCHE PATENTSCHRIFT

(11) **EP 2 400 638 B1**
(45) Veröffentlichungstag und Bekanntmachung des Hinweises auf die Patenterteilung: **29.05.2019**
(21) Anmeldenummer: 11005137.2
(22) Anmeldetag: 22.06.2011
(51) Int. Cl.: H02K 3/52, H02K 15/06, H02K 3/28, H02K 15/04

(54) **Verfahren und Vorrichtung zur Bewicklung von Polsternen für Statoren von Innenläufermotoren**
Method and device for winding pads for stators of internal rotor motors
Procédé et dispositif de bobinage pour rembourrages destinés à des stators de moteurs à rotor intérieur

(30) Priorität: 25.06.2010 DE 102010025134; 08.07.2010 DE 102010026527
(43) Veröffentlichungstag der Anmeldung: 28.12.2011
(73) Patentinhaber: Aumann Espelkamp GmbH, 32339 Espelkamp (DE)
(72) Erfinder: Hagedorn, Jürgen, 32312 Lübbecke (DE)
(74) Vertreter: Schober, Mirko

(56) Entgegenhaltungen:
- EP-A2- 1 168 570
- DE-A1-102004 007 475
- JP-A- 2008 172 863
- US-A1- 2002 130 583
- US-A1- 2007 101 569

## Beschreibung

Die Erfindung betrifft ein Verfahren sowie eine Vorrichtung zur Bewicklung von Polsternen, insbesondere für Statoren von Innenläufermotoren.

Bei der Bewicklung eines Stators ist es üblich, diesen vor dem Bewickeln in Segmente aufzuteilen, um eine bessere Zugänglichkeit der zu bewickelnden Bereiche zu ermöglichen. Eine Möglichkeit der Segmentierung ist die Aufteilung des Stators in Segmente für Einzelpole und ein Joch bzw. einen Rückschlussring, im Folgenden als "Joch" bezeichnet, in den die Einzelpole regelmäßig über eine Presspassung eingesetzt werden. Gerade diese Presspassung ist dabei in der Praxis oft schwierig zu handhaben.

Weiterhin ist aus dem Stand der Technik bekannt, beispielsweise aus der DE 10 2006 041 715 A1, dass die ohnehin notwendige Isolierung zwischen Wicklung und dem Eisenpaket des Stators bzw. dessen Segmentteilen genutzt werden kann, um die Platzierung der Spulen auf den Segmenten des Eisenpakets des Stators sowie deren Zusammenfügen zum fertigen Stator zu erleichtern. In der zitierten Druckschrift werden daher die Einzelpolsegmente in einem faltbaren, sternförmigen Kunststoffträger angeordnet, der gleichzeitig als Isolierung zwischen dem Eisenpaket des Stators und den Spulenwicklungen dient. Die gesamte Anordnung wird durch einen Faltvorgang von einer Bewicklungsposition in die für den Stator vorgesehene Geometrie überführt. Dabei ist darauf zu achten, dass die Verdrahtung der Spulen im Bereich der Knickstellen vorgesehen wird und eine ausreichende Drahtlänge vorhanden ist, um den Faltvorgang zu ermöglichen. Der Faltvorgang des sternförmigen Kunststoffteils ermöglicht zwar eine einfache Überführung der Polsegmente aus einer gut zugänglichen Bewicklungs- in die kompakte Endposition, eine präzise Positionierung der Einzelpolsegmente kann jedoch nur in sehr begrenztem Umfang gewährleistet werden, wodurch sich die technischen Schwierigkeiten beim Einpassen der Einzelpolsegmente in das Joch auch bei dieser Verfahrensvariante ergeben.

Die EP 0 849 857 A1 offenbart ein Verfahren, bei dem die Einzelpole zu einem Polstern vereint ausgebildet sind und von außen mit vorgewickelten Spulen bestückt werden können, wodurch sich eine Einheit ergibt, die im Ganzen in das Joch eingesetzt werden kann. Das Aufschieben vorgewickelter Spulen auf den Polstern birgt jedoch das Risiko, dass die empfindlichen Spulenwicklungen verletzt werden, wodurch Unterbrechungen und/oder Kurzschlüsse erzeugt werden können, die im schlimmsten Fall den gesamten Stator unbrauchbar machen. Des Weiteren wird keine Lösung für das Problem der elektrischen Kontaktierung der einzelnen vorgewickelten Spulen angegeben. Es ist davon auszugehen, dass eine Verschaltung der vorgewickelten Spulen erst nachträglich in mühevoller Handarbeit erfolgen kann.

Die EP 1 168 570 A2 offenbart die Konfektionierung eines Polsterns zu einem Stator, wobei bewickelte Spulenhalter mit Clips gehalten auf den Polsegmenten des Polsterns lösbar befestigt und anschließend bei der Konfektionierung des Stators gesichert werden. Dabei wird keine Aussage gemacht, ob die Konfektionierung händisch oder zumindest teilweise maschinell erfolgt.

Die JP 2008 172 863 A offenbart ein Verfahren zur kompakten Bewicklung von Spulenhaltern. Dabei werden die leeren Spulenhalter, die an einen Transportvorrichtung angeordnet sind, einer Wickelvorrichtung zugeführt, dort bewickelt und mit derselben Transportvorrichtung anschließend einem Polstern zugeführt, wo sie auf die entsprechenden Polsegmente des Polsterns übertragen werden. Hier erfolgen die Bewicklung und die Bestückung der Polsterne weitgehend automatisiert.

Die DE 10 2004 007 475 A1 offenbart eine Vorrichtung und Verfahren zur Herstellung von Statoren, bei denen die leeren Spulenhalter einer Wickelvorrichtung zugeführt, dort bewickelt und anschließend in ein Palettenmagazin abgeführt werden. Von dort aus werden die bewickelten Spulenhalter auf die Polsegmente eines Polsterns angeordnet und der weitere Stator zusammengebaut.

Nachteil bei diesen Verfahren ist, dass bei einem Auftragswechsel, bei dem die Größe der Spulenhalter verändert, eine längere Stillstandszeit erforderlich ist, um die bewickelten Spulenhalter an der Polsternen anzubringen und die Zuführung der anders dimensionierten Spulenträger einzurichten. Weiterhin haben die Vorrichtungen einen relativ großen Platzbedarf.

Der Erfindung liegt daher die Aufgabe zugrunde, eine Vorrichtung sowie ein Verfahren der eingangs genannten Art anzugeben, welche die beschriebenen Nachteile nicht oder in vermindertem Umfang aufweisen.

Gelöst wird die Aufgabe durch ein Verfahren mit den Merkmalen des Anspruchs 1 und eine Vorrichtung mit den Merkmalen des Anspruchs 8. Die Merkmale der jeweiligen Unteransprüche betreffen vorteilhafte Ausführungsformen.

Erfindungsgemäß wird die Aufgabe dadurch gelöst, dass ein Spulenhalter bewickelt wird. Bei dem Spulenhalter handelt es sich vorzugsweise um ein Kunststoffteil, das gleichzeitig der Isolierung zwischen Wicklung und Eisenpaket des Stators dient. Erfindungsgemäß wird der Spulenhalter zur Bewicklung auf einen Wickeldorn verschoben, auf diesem bewickelt und im bewickelten Zustand auf den Polstern geschoben. Durch die Bewicklungsposition des Spulenhalters auf dem Wickeldorn ist es vorteilhafterweise möglich, zum Bewicklen die Flyer-Wickeltechnik einzusetzen.

Erfindungsgemäß wird der Spulenhalter dabei durch eine Verschiebeeinrichtung verschoben. Bei der Verschiebeeinrichtung handelt es sich vorzugsweise um eine beispielsweise gabelartige Einrichtung, die mit dem zur Aufnahme der Wicklung bestimmten Bereich des Spulenhalters in Eingriff gebracht werden kann. Eine derartige Ausführung ermöglicht das Verschieben des unbewickelten Spulenhalters auf dem Wickeldorn, ohne dass am Spulenhalter Mittel zum Angriff der Verschiebeeinrichtung vorgesehen sein müssen.

Das Aufschieben des bewickelten Spulenhalters auf den Polstern kann dabei vorzugsweise durch eine Andockhülse geschehen. Diese ist auf dem Wickeldorn verschieblich gelagert und kann dadurch den bewickelten Spulenhalter vom Wickeldorn auf den Polstern schieben. Für die Schiebebewegung kann dabei ein separater Antrieb vorgesehen sein. Vorzugsweise wird jedoch auch diese Verschiebebewegung durch die Verschiebeeinrichtung zum direkten Verschieben des Spulenhalters übernommen. Vorzugsweise wird hierfür ein dem unbewickelten Spulenhalter geometrisch ähnlicher Bereich an der Andockhülse vorgesehen, mit dem die Verschiebeeinrichtung zum Verschieben des Spulenhalters in Eingriff gebracht werden kann.

Vorzugsweise ist an dem Polstern ein Schaltungsträger angeordnet, bei dem es sich beispielsweise um eine Schaltplatine handeln kann. Vorzugsweise sind dabei Kontaktelemente an den Spulenhaltern vorgesehen, die mit entsprechenden Kontaktgegenelementen an dem Schaltungsträger in Eingriff gebracht werden, wenn der Spulenhalter auf den Polstern geschoben wird. Die Wicklung des Spulenhalters muss dann nur mit den Kontaktelementen am Spulenhalter kontaktiert werden, wobei die Kontaktelemente des Spulenhalters zu diesem während der gesamten weiteren Prozessierung ortsfest bleiben, d.h. die empfindlichen Kontaktierungsdrähte der Bewicklung sind keiner mechanischen Beanspruchung mehr ausgesetzt.

Alternativ kann der Schaltungsträger lediglich eine rein mechanische Trägerfunktion für das schaltungsgerechte Verlegen der Drähte haben, wobei die Verlegung des Drahtes vorzugsweise durch die Bewicklungseinrichtung, beispielsweise einen Flyerarm erfolgt.

Bei dieser Variante kontaktiert die Bewicklungseinrichtung den Draht zunächst auf dem Schaltungsträger, vorzugsweise auf einem auf diesem vorgesehenen elektrischen Verbindungselement, beispielsweise durch eine Schweißverbindung. Dann wird der Draht zu dem zu bewickelnden Spulenhalter verlegt und dieser in seiner Bewicklungsposition auf dem Wickeldorn bewickelt. Dabei entsteht eine Drahtverbindung von dem Schaltungsträger zum Spulenhalter, welche aus einem Stück Draht besteht, welches den Abstand des auf dem Wickeldorn positionierten Spulenhalters zu dem Schaltungsträger überbrückt. Bei Verschieben des Spulenhalters auf den Polstern würde sich so ein überschüssiges loses Stück Draht ergeben. Dieses lose Stück Draht wird daher vorteilhafterweise beim Verschieben des Spulenhalters auf den Polstern durch hierfür vorgesehene Drahtführungselemente so geführt, dass sich beim Einschieben des Spulenhalters eine ausreichend gestraffte Verlegung dieses Drahtstücks ergibt.

Vorzugsweise kann in diesem Fall das andere Ende der Spulenwicklung nach dem Einschieben auf den Schaltungsträger geführt und auf diesem verlegt und/oder kontaktiert werden, wodurch sich bei diesem Ende der Spulenwicklung kein Drahtüberschuss ergibt.

Weiterhin ist es von Vorteil, Arretierelemente und Aufnahmen für die Arretierelemente vorzusehen, mit denen die Spulenhalter auf dem Polstern, vorzugsweise nach Art einer Clipsverbindung, gesichert werden.

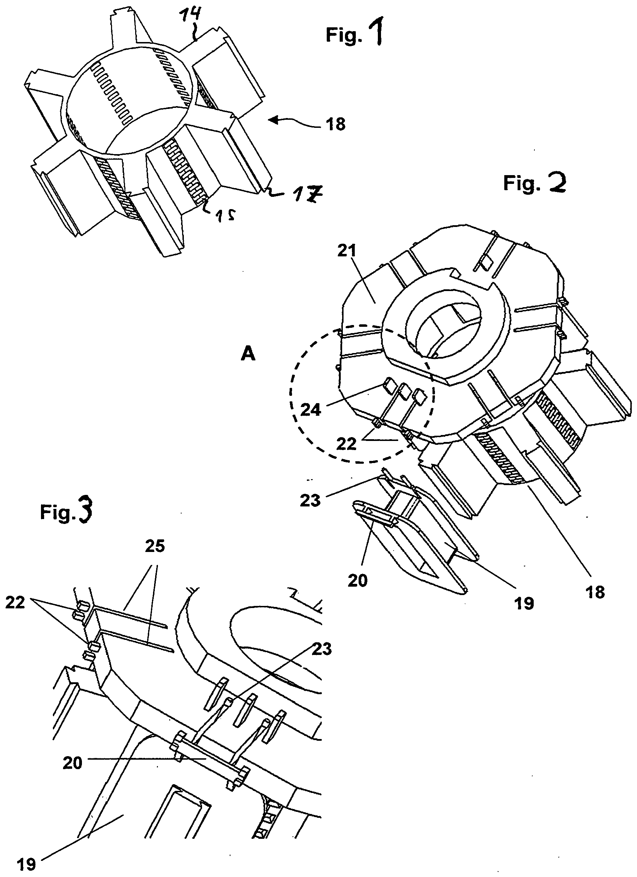

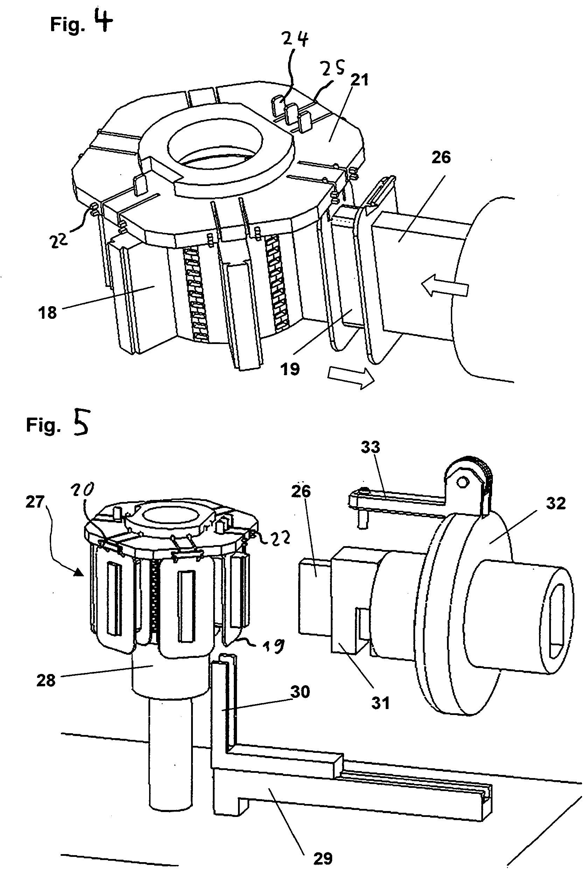

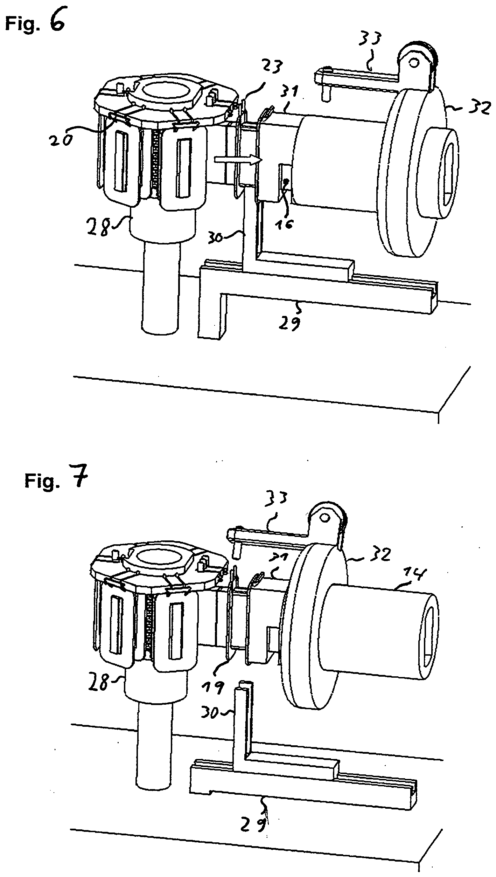

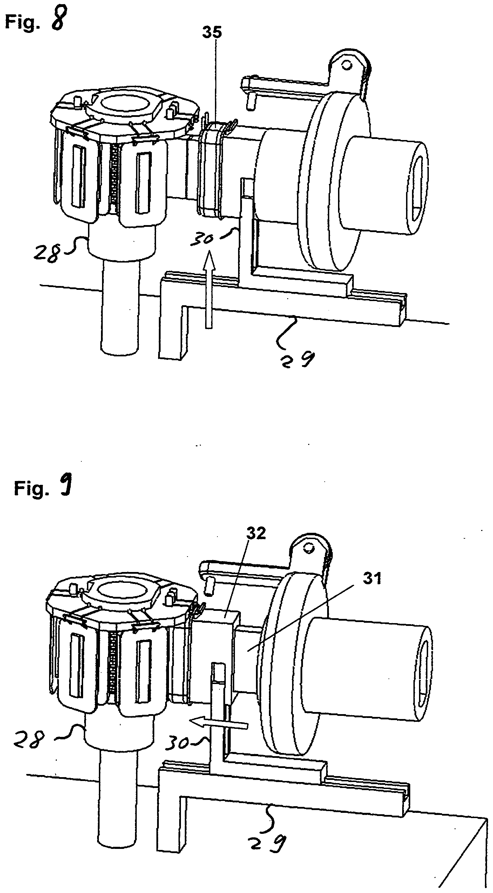

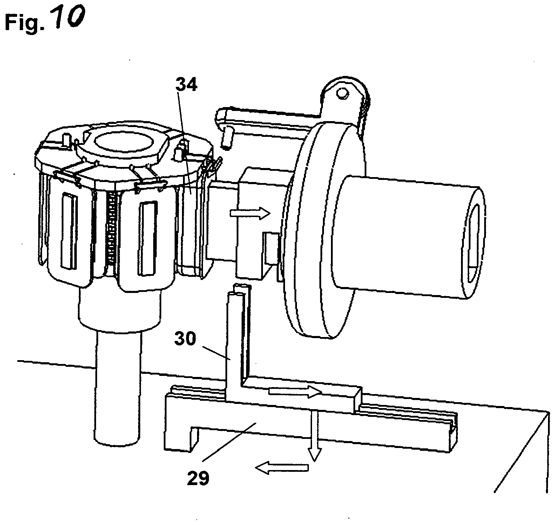

Die Erfindung wird im Folgenden anhand der Figuren 1 bis 10 schematisch näher erläutert:
- Figur 1 -: zeigt einen beispielhaften Polstern,
- Figur 2 -: zeigt die Bestandteile eines beispielhaften, erfindungsgemäßen Spulenhaltersystems für den Polstern aus Figur 1,
- Figur 3 -: zeigt eine Detaildarstellung des in Figur 2 markierten Bereichs A,
- Figur 4 -: zeigt schematisch das Andocken eines beispielhaften erfindungsgemäßen Wickeldorns an einen beispielhaften Polstern,
- Figur 5 -: zeigt schematisch eine beispielhafte erfindungsgemäße Vorrichtung und einen mit einem beispielhaften erfindungsgemäßen Spulenhaltersystem versehenen Polstern,
- Figur 6 -: zeigt die Vorrichtung aus Figur 5 beim Verschieben des Spulenhalters vom Polstern auf den Wickeldorn,
- Figur 7 -: zeigt die Vorrichtung aus Figur 5 beim Bewickeln eines Spulenhalters,
- Figur 8 -: zeigt die Vorrichtung aus Figur 5 unmittelbar vor Beginn des Verschiebens des Spulenhalters vom Wickeldorn auf den Polstern,
- Figur 9 -: zeigt die Vorrichtung aus Figur 5 unmittelbar am Ende der Verschiebebewegung des Spulenhalters vom Wickeldorn auf den Polstern,
- Figur 10 -: zeigt die Vorrichtung aus Figur 5 nachdem die Andockhülse wieder zurück in ihre Ausgangslage verschoben wurde.

Das erfindungsgemäße Verfahren beschreibt die Bewicklung eines Polsterns 18, der aus Vollpolsegmenten 14 besteht, die durch geeignete Verbindungsbereiche 15 miteinander verbunden sind und so den Polstern 18 bilden. Vorzugsweise weisen die Vollpolsegmente 14 Formschlusselemente 17 zur Verbindung mit dem Joch auf.

Für die Durchführung des erfindungsgemäßen Verfahrens werden weiterhin die Spulenhalter 19 benötigt, die auf die Polsegmente 14 aufgeschoben werden können. Vorzugsweise ist weiterhin ein Schaltungsträger 21 vorhanden, bei dem es sich beispielsweise um eine Platine handeln kann und der vorzugsweise zwei Funktionen erfüllt, nämlich zum einen das elektrische Kontaktieren und Verschalten der auf den Spulenträger 19 aufgenommenen Spulen, zum anderen das Fixieren der Spulenhalter 19 in ihrer am Polstern 18 aufgenommenen Position.

Hierfür weisen die Spulenhalter 19 vorzugsweise Kontaktelemente 23 auf, die beispielsweise als Pins ausgebildet sein können und geeignet sind, in Kontaktgegenelemente 25 am Schaltungsträger, bei denen es sich beispielsweise um Schlitze handeln kann, in denen entsprechende Kontaktzungen angebracht sind, einzugreifen. Die Spulenwicklungen werden dabei an den Kontaktelementen 23 kontaktiert und über die in Schaltungsträger 21 integrierte elektrische Verschaltung, vorzugsweise in Stern- oder Dreiecksschaltung verschaltet. Vorzugsweise weist der Schaltungsträger 21 elektrische Verbindungselemente 24 auf, die beispielsweise als Steckerfahnen ausgebildet dazu dienen, den Stator mit seiner Stromversorgung zu verbinden.

Alternativ kann der Schaltungsträger 18 selbst keine elektrischen Komponenten enthalten, sondern lediglich, beispielsweise als Kunststoffteil ausgeführt, als Träger für die schaltungsgerechte Verlegung der Drahtenden der einzelnen Wicklungen von den Spulenhaltern 19 zu den elektrischen Verbindungselementen 24 dienen.

Bei dieser Variante kontaktiert im gezeigten Beispiel die Bewicklungseinrichtung den Draht zunächst auf dem Schaltungsträger 21, vorzugsweise auf einem auf diesem vorgesehenen elektrischen Verbindungselement 24, beispielsweise durch eine Schweißverbindung. Dann wird der Draht zu dem zu bewickelnden Spulenhalter 19 verlegt und dieser in seiner Bewicklungsposition auf dem Wickeldorn 26 bewickelt. Dabei entsteht eine Drahtverbindung von dem Schaltungsträger 21 zum Spulenhalter 19, welche aus einem Stück Draht besteht, welches den Abstand des auf dem Wickeldorn 26 positionierten Spulenhalters 19 zu dem Schaltungsträger 21 überbrückt. Bei Verschieben des Spulenhalters 19 auf den Polstern 18 würde sich so ein überschüssiges loses Stück Draht ergeben. Dieses lose Stück Draht wird daher vorteilhafterweise beim Verschieben des Spulenhalters 19 auf den Polstern 18 durch hierfür vorgesehene Drahtführungselemente so geführt, dass sich beim Einschieben des Spulenhalters 19 eine ausreichend gestraffte Verlegung dieses Drahtstücks ergibt. Die Drahtführungselemente können dabei beispielsweise in Form von Kunststoffnasen, beispielsweise im Bereich am Spulenhalter 21 vorgesehener Schlitze 25 vorgesehen sein, die den Draht derart führen, dass er in seiner endgültigen Verlegeposition, beispielsweise durch das Ausbilden von mäanderartigen Drahtschlaufen, eine ausreichende Straffung aufweist.

Vorzugsweise kann in diesem Fall das andere Ende der Spulenwicklung nach dem Einschieben auf den Schaltungsträger 21 geführt und auf diesem verlegt und/oder kontaktiert werden, vorzugsweise an einem weiteren elektrischen Verbindungselement 24, so dass sich vorzugsweise eine Stern- oder Dreieckschaltung der Spulen ergibt. Dadurch ergibt sich bei diesem Ende der Spulenwicklung kein Drahtüberschuss.

Zur Sicherung der Spulenhalter 19 auf den Polsegmenten 14 des Polsterns 18 können am Spulenhalter 19 Arretierelemente 20 vorgesehen sein, die geeignet sind, in entsprechende Aufnahmen einzugreifen und dadurch den Spulenhalter 19 in der aufgenommenen Position zu sichern. Beispielsweise kann das Arretierelement 20 als Arretierbrücke ausgebildet sein, die in Arretiergegenelemente 22 eingreift, die beispielsweise als gabelförmige Gegenelemente einer Clipsverbindung ausgebildet sind, wobei vorzugsweise die Verbindung aus Arretierelement und Arretiergegenelement so ausgebildet ist, dass deren Eingriffsrichtung parallel zu Aufschieberichtung des Spulenhalters 19 auf das Polsegment 14 verläuft.

Der Wickeldorn 26 ist derart gestaltet, dass sein Querschnitt in etwa dem Querschnitt eines Polsegments 14 entspricht, so dass der Wickeldorn 26 fluchtend an ein Polsegment 14 angedockt bzw. in Verlängerung eines Polsegments positioniert werden kann, so dass aufgrund der ähnlichen Querschnitte ein Verschieben des Spulenhalters 19 auf den Wickeldorn 26 möglich ist. Zum Verschieben ist eine Verschiebeeinrichtung 30 vorgesehen, die geeignet ist, am Spulenhalter 19 anzugreifen. Vorzugsweise ist die Verschiebeeinrichtung 30 dabei so ausgebildet, dass sie in den für die Aufnahme der Spulenwicklung vorgesehenen Bereich des Spulenhalters 19 eingreifen kann. Beispielsweise durch eine gabelförmige Gestaltung. Die Verschiebeeinrichtung 30 kann dabei durch eine Verschiebeführung 29 vorzugsweise parallel zur Orientierung des Wickeldorns 26 bewegt werden und so den Spulenhalter 19 auf den Wickeldorn 26 schieben. Für die umgekehrte Verschiebebewegung ist es vorteilhaft, auf dem Wickeldorn 26 eine Andockhülse 31 vorzusehen. Bei der Andockhülse 31 handelt es sich um ein auf dem Wickeldorn 26 verschieblich ausfgenommenes Bauteil, welches geeignet ist, den Spulenhalter 19 vom Wickeldorn 26 auf ein Polsegment 14 zu verschieben. Vorzugsweise weist die Andockhülse 31 dabei einen Bereich 16 auf, der geometrisch so gestaltet ist, dass er den Angriff der Verschiebeeinrichtung 30 ermöglicht, wodurch es möglich ist, die Andockhülse 31 ebenfalls durch die Verschiebeeinrichtung 30 zu bewegen.

Erfindungsgemäß weist die Vorrichtung eine drehbare Polsternaufnahme 28 auf, die in der Lage ist, die Einheit 27 aus Polstern 18 und erfindungsgemäßem Spulenhaltersystem aufzunehmen und vorzugsweise um die Statorachse zu verschwenken, so dass die einzelnen Spulenhalter 19 nacheinander bewickelt werden können.

Vorzugsweise ist zur Bewicklung ein Flyer-Wickelsystem vorgesehen, wobei der Flyerarm 33 an einer Flyerscheibe 32 aufgenommen ist, die vorzugsweise an einer Lagerung verschieblich entlang der Achse des Wickeldorns 26 aufgenommen ist, so dass die Bewicklungsmimik aus dem Arbeitsbereich der Verschiebeeinrichtung 30 gefahren werden kann. Gleichzeitig ist die Verschiebeeinrichtung vorzugsweise derart verschieb- oder verschwenkbar aufgenommen, dass sie um ein ungestörtes Bewickeln zu ermöglichen, außerhalb des Arbeitsbereichs des Flyerarms 33 positioniert werden kann.

## Patentansprüche

1. Verfahren zur Bewicklung von Polsternen (18), insbesondere für Statoren von Innenläufermotoren,
wobei die Polsterne (18) aus Vollpolsegmenten (14) bestehen und durch geeignete Verbindungsbereiche (15) miteinander verbunden sind,
wobei eine Einheit (27) aus Polstern (18) und Spulenhalter (19) von einer drehbaren Polsternaufnahme (28) aufgenommen, ein Wickeldorn (26) fluchtend an ein Polsegment (14) angedockt oder in Verlängerung eines Polsegments (14) positioniert, durch mindestens eine Verschiebeeinrichtung (30) ein Spulenhalter (19) auf einen Wickeldorn (26) verschoben, der Spulenhalter (19) auf dem Wickeldorn (26) bewickelt und der bewickelte Spulenhalter (19) wieder auf den Polstern (18) geschoben wird.

2. Verfahren nach Anspruch 1,
**dadurch gekennzeichnet,**
**dass** zum Bewickeln die Flyer-Wickeltechnik eingesetzt wird.

3. Verfahren nach Anspruch 1 oder 2,
**dadurch gekennzeichnet,**
**dass** zum Verschieben des Spulenhalters (19) auf den Wickeldorn (26) eine Verschiebeeinrichtung (30) mit dem zur Aufnahme der Wicklung bestimmten Bereich des Spulenhalters (19) in Eingriff gebracht wird.

4. Verfahren nach einem der Ansprüche 1 bis 3,
**dadurch gekennzeichnet,**
**dass** zum Verschieben des Spulenhalters (19) auf den Polstern (18) eine Verschiebeeinrichtung (30) mit einer Andockhülse (31) in Eingriff gebracht wird.

5. Verfahren nach einem der Ansprüche 1 bis 4,
**dadurch gekennzeichnet,**
**dass** die Verschiebung des Spulenhalters (19) in beide Verschieberichtungen durch die gleiche Verschiebeeinrichtung (30) erfolgt.

6. Verfahren nach einem der Ansprüche 1 bis 5,
**dadurch gekennzeichnet,**
**dass** der Spulenhalter (19) nach dem Aufschieben auf den Polstern (18) durch eine Clipsverbindung gesichert wird.

7. Verfahren nach einem der Ansprüche 1 bis 6,
**dadurch gekennzeichnet,**
**dass** die Kontaktierung des einen Endes des Wicklungsdrahts an einem auf dem Wicklungsträger (21) vorgesehenen elektrischen Verbindungselement (24) vorgenommen und der Draht von diesem bis zur Bewicklungsposition des Spulenhalters (19) auf dem Wickeldorn (26) verlegt wird, wobei der so entstandene überschüssige Drahtabschnitt beim Verschieben des bewickelten Spulenhalters (19) auf den Polstern (18) durch Drahtführungselemente derart in seine endgültige Verlegeposition führen, dass sich eine ausreichend straffe Verlegung des Drahtabschnitts ergibt.

8. Vorrichtung zur Bewicklung von Polsternen (18), insbesondere für Statoren von Innenläufermotoren, insbesondere durch ein Verfahren nach Anspruch 1 bis 7,
wobei die Polsterne (18) aus Vollpolsegmenten (14) bestehen und durch geeignete Verbindungsbereiche (15) miteinander verbunden sind,
wobei die Vorrichtung eine Polstern-Aufnahme (28) zur um eine erste Achse drehbaren Aufnahme einer Einheit (27) aus Polstern (18) und Spulenhaltern (19) und einen Wickeldorn (26) aufweist, der fluchtend an ein Polsegment (14) andockenbar oder in Verlängerung eines Polsegments (14) positionierbar ist, sowie eine Verschiebeeinrichtung (30), die geeignet ist, Spulenhalter (19) von dem Polstern (18) auf den Wickeldorn (26) und von dem Wickeldorn (26) auf den Polstern (18) zu schieben.

9. Vorrichtung nach Anspruch 8,
**dadurch gekennzeichnet,**
**dass** zum Verschieben des Spulenhalters (19) auf den Polstern (18) die Verschiebeeinrichtung (30) mit einer Andockhülse (31) in Eingriff gebracht werden kann.

10. Vorrichtung nach Anspruch 8 oder 9,
**dadurch gekennzeichnet,**
**dass** zum Verschieben des Spulenhalters (19) auf den Polstern (18) und/oder den Wickeldorn (26) die Verschiebeeinrichtung (30) mit dem zu bewickelnden Bereich des Spulenhalters (18) in Eingriff gebracht werden kann.

## Claims

1. Method for winding pole stars (18), in particular for stators of internal rotor motors,
wherein the pole stars (18) comprise solid pole segments (14) and are connected to one another by suitable connecting regions (15), wherein a unit (27) comprising a pole star (18) and coil holder (19) is received by a rotatable pole star holder (28), a winding mandrel (26) is docked flush against a pole segment (14) or is positioned in an extension of a pole segment (14), a coil holder (19) is moved through a least a displacement device (30) onto a winding mandrel (26), the coil holder (19) is wound on the winding mandrel (26) and the wound coil holder (19) is pushed again onto the pole star (18).

2. Method according to claim 1,
**characterised in that**
the flyer winding technology is used for winding.

3. Method according to claim 1 or 2
**characterised in that**
in order to slide the coil holder (19) onto the winding mandrel (26) a displacement device (30) is brought into engagement with the region of the coil holder (19) intended to receive the winding.

4. Method according to one of claims 1 to 3
**characterised in that**
in order to slide the coil holder (19) onto the pole star (18) a displacement device (30) is brought into engagement with a docking sleeve (31).

5. Method according to one of claims 1 to 4
**characterised in that**
moving the coil holder (19) in both the displacement directions is carried out by the same displacement device (30).

6. Method according to one of claims 1 to 5
**characterised in that**
once the coil holder (19) has been pushed onto the pole star (18) it is secured by a clip connection.

7. Method according to one of claims 1 to 6
**characterised in that**
the contacting of one end of the winding wire is undertaken at an electrical connecting element (24) provided on the winding carrier (21), and the wire is laid from this up to the winding position of the coil holder (19) on the winding mandrel (26), wherein the excess wire portion thus formed during displacement of the wound coil holder (19) onto the pole star (18) is guided through wire guiding elements into its final laid position in such a way that a sufficiently taut laying of the wire portion is achieved.

8. Device for winding pole stars (18), in particular for stators of internal rotor motors, in particular through a method according to claims 1 to 7,
wherein the pole stars (18) consist of solid pole segments (14) and are connected to one another by suitable connecting regions (15), wherein the device has a pole star holder (28) for holding a unit (27), comprising a pole star (18) and coil holders (19), for rotation about a first axis, and has a winding mandrel (26) which can be docked flush against a pole segment (14) or positioned in an extension of a pole segment (14), as well as a displacement device (30) which is suitable for sliding coil holders (19) from the pole star (18) onto the winding mandrel (26) and from the winding mandrel (26) onto the pole star (18).

9. Device according to claim 8
**characterised in that**
in order to slide the coil holder (19) onto the pole star (18) the displacement device (30) can be brought into engagement with a docking sleeve (31).

10. Device according to claim 8 or 9
**characterised in that**
in order to slide the coil holder (19) onto the pole star (18) and/or the winding mandrel (26) the displacement device (30) can be brought into engagement with the region of the coil holder (18) which is to be wound.

## Revendications

1. Procédé de bobinage d'arrangements de pôles en forme d'étoile (18), particulièrement pour stators de moteurs à rotor interne, sachant que les arrangement de pôles en forme d'étoile (18) consistent en segments de pôles lisses (14) et sont reliés les uns aux autres par des sections de liaison (15) appropriées, sachant qu'une unité (27) d'arrangement de pôles en forme d'étoile (18) et de porte-bobines (19) est logée dans un réceptacle rotatif d'arrangement de pôles en forme d'étoile (28), qu'un mandrin de bobinage (26) est ancré en alignement sur un segment de pôle (14) ou est positionné en prolongement d'un segment de pôle (14), qu'un porte-bobine (19) est déplacé sur un mandrin de bobinage (26) par au moins un dispositif de déplacement (30), que le porte-bobine (19) est bobiné sur le mandrin de bobinage (26) et que le porte-bobines (19) bobiné est de nouveau poussé sur l'arrangement de pôles en forme d'étoile (18).

2. Procédé selon la revendication 1,
**caractérisé en ce que**
le bobinage est effectué selon la technique de bobinage de Flyer.

3. Procédé selon revendication 1 ou 2,
**caractérisé en ce que**
pour le déplacement du porte-bobine (19) sur le mandrin de bobinage (26), un dispositif de déplacement (30) est mis en prise avec la section du porte-bobine (19) destinée à recevoir l'enroulement.

4. Procédé selon l'une des revendications 1 à 3,
**caractérisé en ce que**
pour le déplacement du porte-bobine (19) sur l'arrangement de pôles en forme d'étoile (18), un dispositif de déplacement (30) est mis en prise avec une douille d'ancrage (31).

5. Procédé selon l'une des revendications 1 à 4,
**caractérisé en ce que**
le déplacement du porte-bobine (19) dans les deux directions de déplacement est effectué par le même dispositif de déplacement (30).

6. Procédé selon l'une des revendications 1 à 5,
**caractérisé en ce que**
le porte-bobine (19) est sécurisé par une liaison clipsée après avoir été poussé sur l'arrangement de pôles en forme d'étoile (18).

7. Procédé selon l'une des revendications 1 à 6,
**caractérisé en ce que**
la mise en contact de l'une des extrémités du fil de bobinage s'effectue sur un élément de liaison (24) électrique, qui est prévu sur le support de bobinage (21) et que le fil de bobinage est posé à partir de celui-ci jusqu'à la position de bobinage du porte-bobine (19) sur le mandrin de bobinage (26), sachant que, lors du déplacement du porte-bobine bobiné (19) sur l'arrangement de pôles en forme d'étoile (18), la portion de fil excédante est amenée dans sa position de pose définitive par des éléments de guidage de fil, de manière à ce que la portion de fil soit suffisamment tendue.

8. Dispositif de bobinage d'arrangements de pôles en forme d'étoile (18), particulièrement pour stators de moteurs à rotor interne, en particulier selon un procédé conforme aux revendications 1 à 7, sachant que les arrangements de pôles en forme d'étoile (18) consistent en segments de pôles lisses (14) et sont reliés les uns aux autres par des sections de liaison (15) appropriées,
sachant que le dispositif présente un réceptacle d'arrangement de pôles en forme d'étoile (28) pour recevoir, en rotation autour d'un premier axe, une unité (27) d'arrangements de pôles en forme d'étoile (18) et de porte-bobines (19), ainsi qu'un mandrin de bobinage (26), qui put être ancré en alignement sur un segment de pôle (14) ou être positionné en prolongement d'un segment de pôle (14), ainsi qu'un dispositif de déplacement (30), qui est apte à conduire des porte-bobines (19) de l'arrangement de pôles en forme d'étoile (18) au mandrin de bobinage (26) et du mandrin de bobinage (26) à l'arrangement de pôles en forme d'étoile (18).

9. Dispositif selon la revendication 8,
**caractérisé en ce que**,
pour déplacer le porte-bobine (19) sur l'arrangement de pôles en forme d'étoile (18), le dispositif de déplacement (30) peut être mis en prise avec une douille d'ancrage (31).

10. Dispositif selon revendication 8 ou 9,
**caractérisé en ce que**,
pour déplacer le porte-bobine (19) sur l'arrangement de pôles en forme d'étoile (18) et / ou sur le mandrin de bobinage (26), le dispositif de déplacement (30) peut être mis en prise avec la section du porte-bobine (19) devant être bobinée.
